# EUROPEAN PATENT APPLICATION

(11) **EP 2 423 561 A1**
(43) Date of publication of application: **29.02.2012**
(21) Application number: 10173705.4
(22) Date of filing: 23.08.2010
(51) Int. Cl.: F16M 13/02, F16B 1/00

(54) **Suspension system for an electronic apparatus**

(71) Applicant: Zanzibar ApS, 6400 Sonderborg (DK)
(72) Inventor: The designation of the inventor has not yet been filed
(74) Representative: Nielsen, Henrik Sten

(57) **Abstract**

A suspension system for an electronic apparatus (10), which has a bottom surface (14) on which a planar area is defined having a specific contour. The system comprises a plate (30) of a ferrous magnetic material, preferably iron, or having a surface coating of a ferrous magnetic or ferrous electric material. The plate has a planar outer surface and has an outer contour congruent with the specific contour of the planar area. The system further comprises fixation elements (40) for fixating the plate to a wall and for exposing the planar outer surface at the wall, and a magnetic foil (42) defining opposite first and second surfaces and having a peripheral contour congruent with the specific contour of the planar area and congruent with the outer contour of the planar outer surface. The first surface is coated with an adhesive for fixating the magnetic foil to the planar area, and the second surface is exposed for contacting the plate and removably suspending the apparatus on the wall.

## Description

The present invention relates to a suspension system for an electronic apparatus and a method of removably suspending an electronic apparatus on a wall.

Many electronic apparatuses within the computer and audio/video entertainment area are intended to be used when positioned on a supporting surface, such as the surface of a table for allowing access to the apparatus, for instance for connecting accessory equipment to the apparatus, such as display units, keyboards, headphones, accessory loudspeakers, hard disc memory units, CD or DVD recorders or external data, video or audio sources such as CD/DVD or Blu-ray readers or recorders.

An apparatus of this kind, however, often tend to have an appearance which does not appeal to the majority of the users or consumers, and therefore calls for a storing of the apparatus in a location different from the intentional use position resting on a supporting surface, such as a surface of a table. Often, the consumer or user is forced to disconnect the apparatus from its accessory equipment and to store the apparatus in a different location, such as in different furniture, such as a cabinet or a closet

Some entertainment apparatuses allow the apparatus to be kept in a cabinet or a closet, while connected to at least some of the auxiliary or accessory equipment and allows the apparatus to be used while still kept in the concealed location within a cabinet or closet.

Certain apparatuses have been developed having specific hardware available for allowing the apparatus to be permanently fixated to a wall or to a table, e.g. to a lower surface of a table allowing a somewhat discrete mounting, still preventing that the apparatus may be used as intended by the manufacturer by positioning the apparatus for allowing easy access to operating the apparatus, e.g. for introducing a disc, such as a CD or DVD or Blu-ray disc for connecting the apparatus to auxiliary or accessory equipment.

In view of the above, there is a need for a piece of equipment or a system allowing an electronic apparatus, in particular a computer, a laptop or a playing console or an audio or video accessory equipment to be used in its intentional position resting on the table and at the same position the apparatus easily accessible on a wall for keeping the apparatus stowed in an aesthetically acceptable position and still allow easy access to the apparatus for operating the apparatus for connecting accessory or disconnecting accessory or auxiliary equipment to the apparatus or simply moving the apparatus from its stow away position to a position standing or resting on a table.

Furthermore, there is a need for a piece of equipment or a allowing the apparatus to be stowed away mounted on a wall in an aesthetically acceptable way and at the same time, allowing easy access to the apparatus for operating the apparatus or for connecting or disconnecting accessory or auxiliary equipment to the apparatus.

The above needs together with other advantages and features which will be evident from the below detailed description of the presently preferred embodiments of the present invention is, according to a first aspect of the present invention obtained by a suspension system for an electronic apparatus, said apparatus having a bottom surface on which a planar area is defined having a specific contour, said system comprising:
i) a plate of a ferrous magnetic material preferably iron, or having a surface coating of a ferrous magnetic or ferrous electric material, said plate having a planar outer surface and having an outer contour congruent with said specific contour of said planar area,
ii) fixation elements for fixating said plate to a wall and for exposing said planar outer surface at said wall, and
iii) a magnetic foil defining opposite first and second surfaces and having a peripheral contour congruent with said specific contour of said planar area and congruent with said outer contour of said planar outer surface, said first surface being coated with an adhesive for fixating said magnetic foil to said planar area, and said second surface being exposed for contacting said plate and removably suspending said apparatus on said wall.

Within the patent literature, the use of magnetic suspension has been described in certain publications, among others in US 5,476,559, US 5,039,047, US 6,821,593, published US patent application US 2005/0139739. US 5,367,278 and US 4,942,071. Reference is made to the above patents and patent application and the above US patents are hereby incorporated in the present specification by reference

According to the basic concept of the present invention, the suspension system according to the first aspect of the present invention is designed for a specific electronic apparatus or appliance having a bottom surface, of which at least a planar area is defined, as the suspension system is dedicated to the apparatus, since the plate and the magnetic foil are provided having shapes in conformity with or congruent with the contour of the planar area of the bottom surface of the apparatus or at least a part of the planar area of the bottom surface of the apparatus. In the suspension system according to the first aspect of the present invention, only three elements are included, namely a plate of a ferrous-magnetic material, a set of fixation elements, preferably ordinary screws to be received in holes in a wall, e.g. in wall plugs or similar fasteners, and a magnetic foil, which is adhered to the apparatus and has an exposed surface to be contacted with the plate for suspending the apparatus on the wall.

The magnetic foil may be provided as a planar magnetic foil, to which an adhesive is applied manually prior to fixating the magnetic foil to the apparatus in question providing the magnetic foil exposed at the planar area of the bottom surface of the apparatus, however, alternatively and preferably, the adhesive is pre-applied to the magnetic foil and initially covered by a release paper or cover foil protecting the adhesive coating and intended to be removed by the user or consumer prior to fixating the magnetic foil to the planar surface of the plate.

The fixation elements, which are preferably constituted by screws or similar elements, e.g. nails, bolts etc. for co-operating with relevant co-operating elements present in or mounted in the wall, are provided in a number corresponding to the number of through-going holes provided in the plate for receiving the screws or similar elements.

The suspension technique according to the first aspect of the present invention may be modified dependent on the actual configuration and shape of the electronic apparatus in question as the electronic apparatus may for instance have feet extending downwardly from the housing of the apparatus for showing the apparatus to be standing on the feet on the supporting surface, e.g. a top surface of a table. In order to allow the suspension system according to the first aspect of the present invention to be used irrespective of the distance from the bottom surface of the apparatus to a supporting surface when the apparatus is standing on a supporting surface, the suspension system according to the first aspect of the present invention may comprise a number of distance elements corresponding to the number of screws serving to fixate the plate relative to the wall for allowing the plate to be positioned at a specific distance from the wall.

In order to simplify the process of mounting the suspension system, in particular mounting the plate relative to the wall, the plate advantageously comprises an adhesive coating applied to the surface of the plate opposite to the planar outer surface of the plate, which planar outer surface is to be contacted by the magnetic foil, whereas the opposite surface is to be temporarily adhered to the wail while permanently fixating the plate to the wall by means of the fixation elements, preferably the screws.

Provided an adhesive coating is provided on the surface of the plate opposite to the planar outer surface of the plate to be contacted by the magnetic foil, a further cover for a release paper is preferably protecting and covering the coating of the plate and intended to be removed prior to the fixating of the plate to the wall.

In certain applications, the presence of a plate of ferrous-magnetic material in particular a metal or iron plate located juxtaposed an electronic, apparatus, may cause interference problems, as the plate may act as an aerial or antenna receiving noise from electrical or appliance or apparatuses located fairly close to the plate and in order to improve the shielding effect of the plate provided noise or problem might occur, the plate may further advantageously comprise a wire connection for connecting the plate to a ground terminal for grounding the plate.

Since the plate constituting an essential element of the suspension system according to the first aspect invention is to be configured in conformity with or corresponding to the planar area or at least a part of the planar area of the bottom surface of the apparatus, which is to be suspended by means of the suspension system, the configuration of the plate or the outer contour of the plate may depend on the actual application, and the specific configuration may therefore be triangular, rectangular, circular, polygonal, elliptical or may alternatively constitute a configuration composed of curved and/or linear segments.

The above needs together with other advantages and features which will be evident from the below detailed description of presently preferred embodiments of the present invention, are according to a second aspect of the present invention obtained by a method of removably suspending an apparatus on a wall, said apparatus having a bottom surface on which a planar area is defined having a specific contour, the method comprising: providing a suspension system including:
i) a plate of ferrous magnetic material, preferably iron, or a plate having a surface coating of a ferrous magnetic or ferrous electric material, said plate having a planar outer surface and having an outer contour congruent with said specific contour of said planar area,
ii) fixation elements for fixating said plate to said wall, and
iii) a magnetic foil defining opposite first and second surfaces and having a peripheral contour congruent with said specific contours of said planar area and congruent with said outer contour of said planar outer surface, said first surface being coated with an adhesive,
the method further comprising:
a) fixating said plate to said wall by means of said fixation elements and exposing said planar outer surface on said wall,
b) fixating said magnetic foil to said bottom surface by contacting said adhesive of said first surface with said planar area, and
c) removably suspending said electronic apparatus on said wall by contacting said magnetic foil with said plate while establishing registration between said magnetic foil and said plate.

A method according to the second aspect of the present invention advantageously also comprises features equivalent to the above described advantageous embodiments of the suspension system according to the first aspect of the present invention.

The present invention is now to be further described with reference to the drawings, in which
Fig 1a is a perspective and schematic view of an apparatus shown in the upper part of Fig. 1a to be mounted on a wall not shown in Fig. 1a by means of a first embodiment of a suspension system according to the present invention shown in the lower part of Fig. 1 a,
Fig. 1b is a perspective and schematic view similar to the view of Fig. 1a and illustrating a first step of fixating a plate of the first embodiment of the suspension system according to the present invention shown in Fig. 1a relative to the wall and fixating a magnetic foil of the first embodiment of the suspension system according to the present invention relative to a surface of the apparatus.
Fig. 1c is a perspective and schematic view similar to the views of Fig. 1a and 1b and illustrating a final step of securing the apparatus relative to the wall by means of the co-operating plate and magnetic foil of the first embodiment of the suspension system according to the present invention.
Fig. 1d is a perspective and schematic view similar to the views of Fig. 1a, 1b and 1c and frustrating the apparatus suspended on and fixated relative to the wall by means of first embodiment of the suspension system according to the present invention,
Fig. 2a is a side-elevational view illustrating the step also shown in Fig. 1c of securing the apparatus relative to the wall by means of the first embodiment of the suspension system according to the present invention,
Fig 2b is a side-elevational view similar to the view of Fig. 2a and illustrating the apparatus secured to and suspended on the wall by means of the magnetic foil and the plate of the first embodiment of the suspension system according to the present invention,
Fig 2c is a detail of the view of Fig. 2b and illustrating the contact between the magnetic foil and the plate of the first embodiment of the suspension system according to the present invention and the positioning of the apparatus spaced from the wall,
Fig 3a is a side-elevational view similar to the view of Fig. 2a and illustrating a different apparatus to be secured to the wall by means of the magnetic foil and the plate of a first embodiment of the suspension system according to the present invention,
Fig 3b is a side-elevational view similar to the view of Fig. 2b and illustrating the apparatus shown in Fig. 3a secured to the wall,
Fig. 3c is a detail similar to the view of Fig. 2c and illustrating the suspension of the apparatus shown in Fig. 3a and 3b on the wall by means of the magnetic foil and the plate of the first embodiment of the suspension system according to the present invention,
Fig. 4a is a side-elevational view similar to the views of Fig. 2a and 3a illustrating the step of securing an apparatus different from the apparatuses shown in Fig. 2a and 3a relative to a plate of a second embodiment of the suspension system according to the present invention,
Fig. 4b is a side-elevational view similar to the views of Fig. 2b and 3b of the apparatus shown in Fig. 4a secured to the wall by means of the second embodiment of the suspension system according to the present invention, and
Fig. 4c is a detail similar to the views of Figs. 2c and 3c illustrating the spacing of the plate of the third embodiment of the suspension system according to the present invention from the wall for keeping the apparatus a specific distance away from the wall.

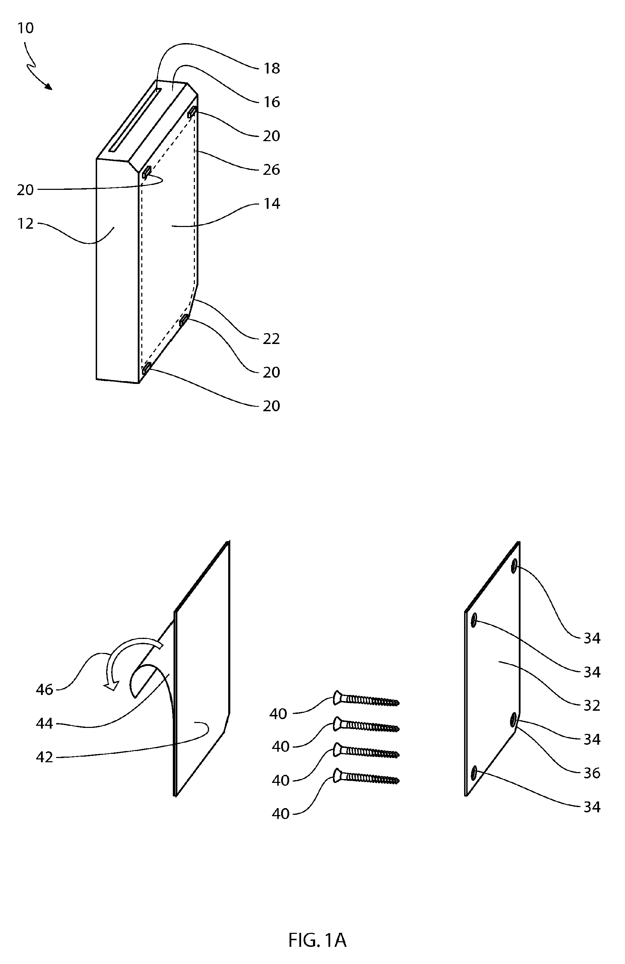

In Fig. 1a, an electronic apparatus is shown, specifically a computer designated the reference numeral 10 in its entirety and having a housing 12 defining a bottom surface 14, on which a total of four feet 20 are mounted for allowing the apparatus to be positioned on a supporting surface such as a surface of a table allowing the apparatus to rest on its feet 20 having the housing 12 of the apparatus 10 raised a short distance above the supporting. The bottom surface 14 is of an overall rectangular configuration, however, provided with an inclined corner surface designated the reference numeral 22 providing an overall configuration of the housing 12 deviating from the conventional housing configuration having a plane bottom surface, plane side surfaces, plane front and rear surfaces and a plane top surface.

The housing 12 further defines a front surface 16, in which a slot 18 is provided, in which a disc, such as a CD, DVD or Blu-ray disc may be received allowing the apparatus to read the information from the disc. The apparatus 10 is further provided with various sockets for receiving cables such as a power cable from a main supply or from a AC/DC converter and possibly a link to an internet connection and/or connections to a LCD screen or similar display unit and/or for connections to an audio/video system. These sockets are provided in a surface opposite to the front surface 16 and are not shown in Fig. 1a.

The apparatus 10 may for some applications be used in its intentional position resting on a supporting surface, such as a surface of a table, not shown in the drawings, however, in many applications, the apparatus needs not to be accessed while resting on the table, but should rather be located at a more discrete position, such as a position mounted on a wall. According to the teachings of the present invention, a suspension system is provided allowing the apparatus 10 to be secured on a wall, however, at the same time easily allowing the apparatus to be removed from the wall and positioned resting on its feet on a supporting surface such as a surface of a table. A third embodiment of the suspension system according to the present invention is shown in the lower part of Fig. 1a and is designated the numeral 30 in its entirety, The first embodiment 30 of the suspension system comprises a plate 32 having four drilled or bored holes 34 located at the corners of the plate 32 and further having a triangular cut-off 36 providing an overall configuration of the plate 32 generally corresponding to the bottom surface 16 of the apparatus 10. The configuration of the plate 32 is as evident from Fig. 1a congruent with a planar surface area indicated by a dotted line 36 at the planar bottom surface 14 of the housing 12 within the feet 20. The plate 32 is made from preferably iron, however, may a!ternatively be made from another ferrous-magnetic material or from an assembly of a non-magnetic supporting substrate and a coating of ferrous-magnetic or ferrous-electric material

The first embodiment of the suspension system 30 shown in the lower part of Fig. 1a further comprises four screws designated reference numeral 40. In Fig. 1a, the plate 32 is shown exposing its one surface to be positioned in contact with the wall on which the apparatus 10 is to be suspended The first embodiment 30 of the suspension system shown in the lower part of Fig. 1a further comprises a magnetic foil 42 having an outer contour congruent with the outer contour of the plate 32 and further congruent with the area defined by the dotted line 26 shown at the bottom surface 14 of the housing 12 shown in the upper part of Fig. 1a, The face of the magnetic foil 42 shown in Fig. 1a is to be contacted with the planar surface of the plate 32 opposite to the surface disclosed in Fig. 1a and on its opposite planar surface, the magnetic foil 42 is provided with an adhesive coating, which is initially covered by a release foil 44, which is peeled of as indicated by an arrow 46.

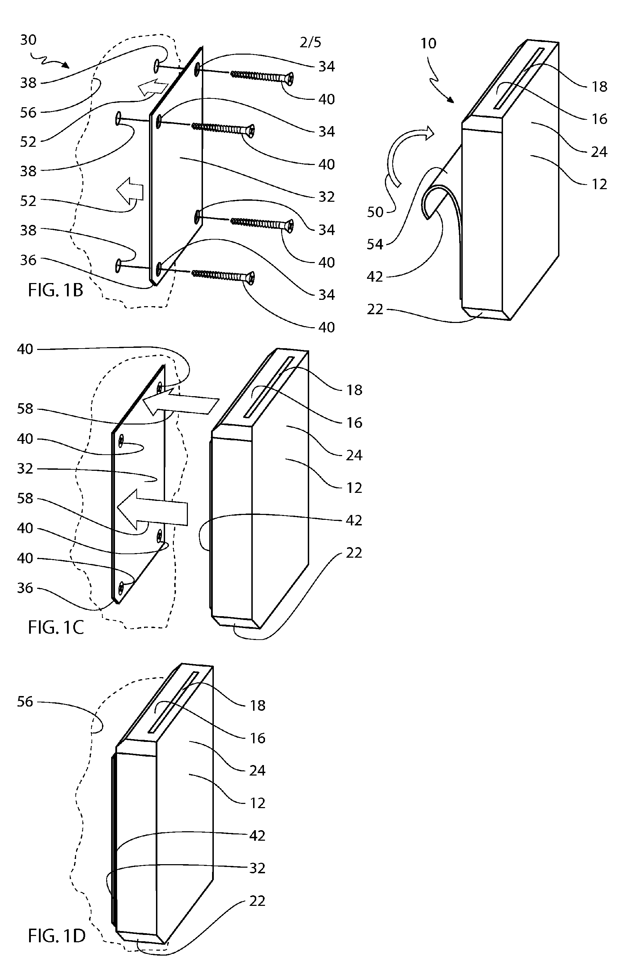

In Fig. 1b, a first step of mounting the suspension system 30 is shown, in which first step the plate 32 is turned as compared to the illustration of Fig. 1a, as the surface exposed in Fig. 1a is facing a wall schematically illustrated by 56, in which wall four holes are drilled or otherwise provided, which holes are designated the reference numeral 38, one of which is shown in phantom line, as the hole is hidden behind the plate 32. The plate 32 is positioned in contact with the wall 56, as the holes 34 are positioned in registration with the holes 38 as indicated by the arrows 52 and the screws 40 are then turned into the holes 38 and tightened for properly fixating the plate 32 in a fixed position relative to the wall 56.

At the same time, the magnetic foil 42 is positioned and adhered to the bottom surface 14 of the housing 12, as the adhesive coating 54 of the foil 42 is exposed by the removal of the release foil 44 shown in Fig. 1a and the adhesive coating 54 is positioned in contact with and adhering to the bottom surface as is indicated by an arrow 56.

In a final step of securing and suspending the apparatus 10 to the wall 56, the apparatus is moved into contact with the plate 32 as indicated by arrows 58 shown in Fig. 1c, as the magnetic foil 42 is contacted with the plate 32 causing the apparatus 10 to be removably suspended on the wall.

In Fig. 1d, the apparatus 10 is shown in its position secured to and suspended on the wall 56, however, due to the releasable contact between the magnetic foil 42 and the plate 32, the apparatus 10 may easily be removed from its position mounted on the wall shown in Fig. 1b and for instance be positioned as originally intended by the manufacturer of the apparatus by allowing the apparatus to be resting on a supporting surface such as the surface of a table.

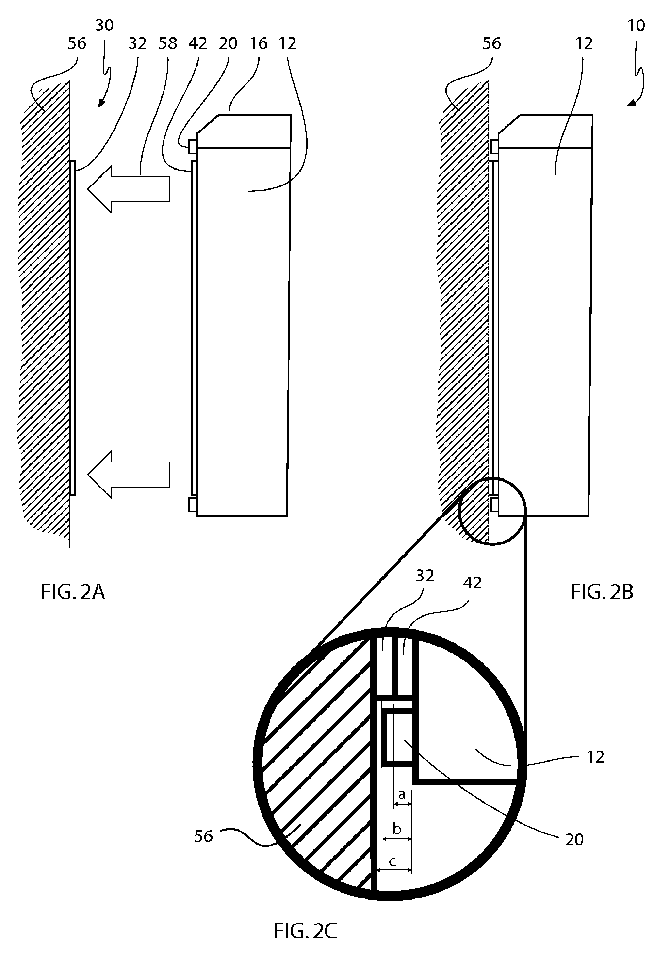

In Fig. 2a, the step of contacting the magnetic foil 42 with the plate 32 also shown in Fig. 1c is illustrated in a side-elevational view and similarly in Fig. 2b, the final suspension of the apparatus 10 on the wall is shown in a side-elevational view similar to the view of Fig. 2a and illustrating the secured fixation of the apparatus to the wall as also illustrated in Fig. 1d. in Fig. 2c, a detail of the lower part of the apparatus 10 is shown in an charged scale including three dimensions a, b and c representing the thickness of the magnetic foil 42, the height of the feet 20 and the total thickness of the magnetic foil 42 and the plate 32, respectively. As is evident from Fig. 2c, the height of the feet 20 is smaller than the total height of the magnetic foil 42 and the plate 32 and at the same time, Fig. 2c illustrates that the thickness of the magnetic foil 42 is smaller than the height of the feet b, consequently, in the suspension of the apparatus 10 on the wall 56, the feet 20 of the apparatus 10 are not contacting the wall 56, whereas provided the apparatus 10 is removed from its suspension on the wall 56, the feet 20 may serve their intentional purpose of allowing the apparatus to rest on the supporting surface such as a surface of a table. Alternatively, provided the thickness of the magnetic foil 42 and the plate 32 is equal to the height of the feet 20, the feet 20 will then also rest on the wall 56 when the apparatus is suspended on the wall.

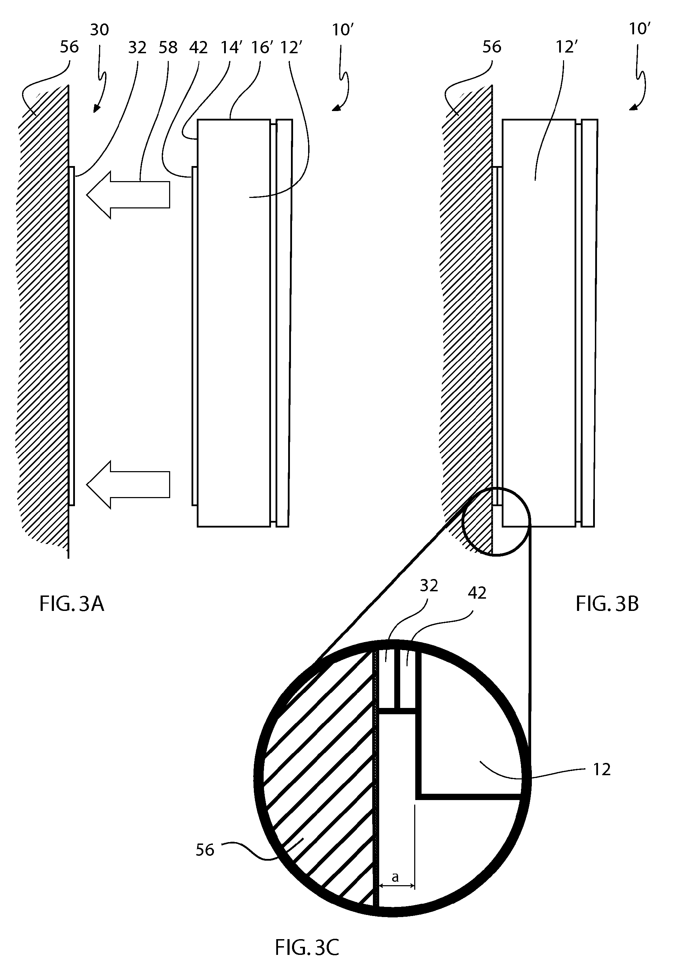

In Fig. 3a, 3b and 3c a modified apparatus 10' is shown, which differs from the above described apparatus 10 in that the apparatus has no feet. Therefore, in the suspension of the apparatus 10, the bottom surface 14 of the apparatus 10 is spaced the same distance c from the wall as illustrated in Fig. 2c,

In Fig. 3a and 3c, the apparatus is designated the reference numeral of 10' and similarly, other components or elements geometrical differing from the components or elements described above, however serving the same purpose as components or elements, respectively, described above, are designated the same integers as previously described, however added with marking in order to identify the geometrical difference.

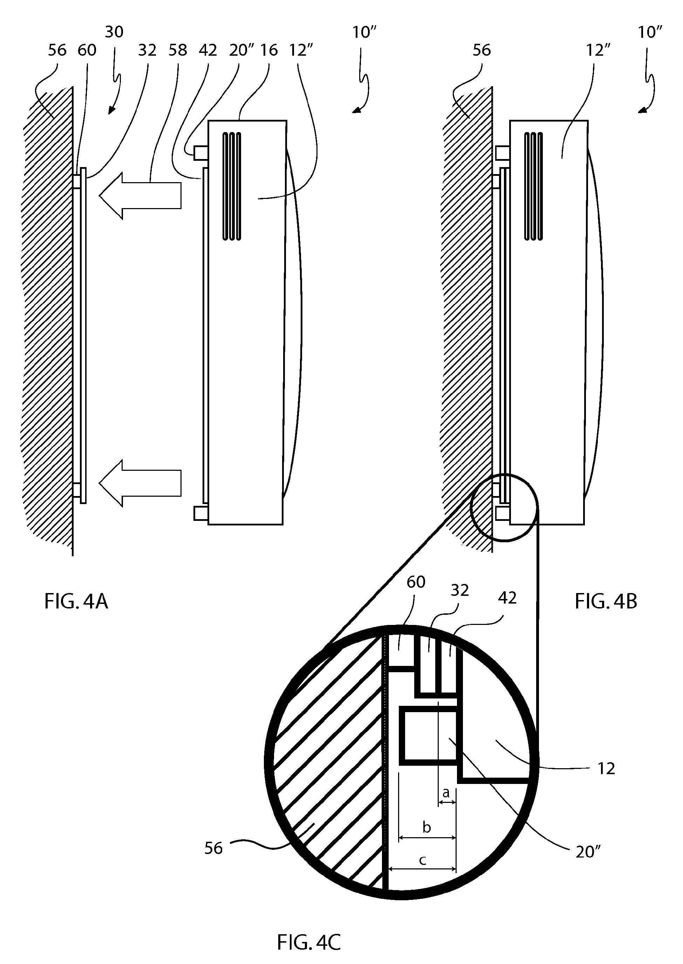

In Fig. 4a, a differently configured or shaped apparatus 10' is shown differing from the apparatus 10 described above with reference to Figs 1a-1d and Figs. 2a-2c and also differing from the apparatus 10' shown in Figs. 3a-3c. The apparatus shown in Figs. 4a-4c is designated the reference numeral 10" and in Figs. 4a-4c, components or elements geometrically differing from the component or elements of the apparatus 10 described above, however serving the same purpose as the components or elements described above, are designated the same reference numeral, however added the marking is order to indentify the different shape, however, due to the correspondence as to the functionality of the components or elements in question, no separate description of the components or elements, respectively, are presented, except for the description of the technical difference between the first embodiment of the suspension system described above and the second embodiment of the suspension system shown in Figs. 4a-4c.

The apparatus 10" shown in Figs. 4a-4c basically differs from the above described apparatus 10 in that the feet 20" of the apparatus 10" are somewhat higher than the feet 20 of the apparatus 10 described above. Consequently, the height of the feet 20" excludes that the first embodiment of the suspension system described above with reference to Figs. 1a-1d and Fig. 2a― 2c and Figs. 3a-3c may be used since the simple combination of the foil 42 and the plate 32 provides a total distance from the wall, which is smaller than the height of the feet 20", therefore, the first embodiment of the suspension system described above cannot be used in combination with the apparatus 10".

In order to allow the suspension technique according to the present invention to be implemented in combination with the apparatus 10", the plate 32 is in Fig. 4a positioned on spacers 60 defining a short distance from the wall 56 Consequently, as is evident from Fig. 4c, the spacers 60 adds to the thickness of the combination of the plate 32 and the magnetic foil 42 providing an overall distance c' from the planar bottom surface of the housing 12" of the apparatus 10" to the wall 56.

It is further to be realised that for some applications, the plate 32 may preferably be grounded by connecting the plate to a ground connection or terminal of the main supply in order to eliminate the risk that the plate 32 serves as an receiver antenna receiving electric noise, which might influence the proper operation of the apparatus suspended on the plate and consequently, serving as an external shield or ground terminal

It is further to be realised that the spacing of the plate from the wall as illustrated in Figs, 4a―4c may be substituted by providing a solid distance body to be positioned between the magnetic foil 42 and the bottom surface of the apparatus, however, from an aesthetic point of view making the apparatus less attractive as compared to the shadow mounting of the magnetic foil 42 on the planar bottom surface as is illustrated in the above embodiments.

### Example

In a prototype embodiment of the suspension system described above with reference to Figs, 1a-1c, the magnetic foil 42 was made from a 2.00mm thick foil delivered from the Danish company Like v. Lars Møller. The foil was magnetised on the one side only and was tested having a suspension capability of approximately 110 g/cm². The magnetic foil is in the manufacturers manual described as being polymer bound and including ferrite bodies and should not be exposed to temperatures above 70°C. The magnetic foil was fixated to the bottom surface of a computer being a Nintendo® Wii by means of a 3m double tape having a thickness of 0.9mm having an acrylic type adhesive capable of the standing exposures to temperatures up to 85°C. The metal plate 32 was made from iron and parted with a durable paint

Although the invention has above been described with reference to specific and preferred embodiments, it is contemplated that the present invention may be modified in numerous aspects without deviating from the overall inventive concept as defined in the appending claims, and such obvious modifications are to be considered encompassed by the protective scope of the appending patent claims.

## Claims

1. A suspension system for an electronic apparatus, said apparatus having a bottom surface on which a planar area is defined having a specific contour, said system comprising:
i) a plate of a ferrous magnetic preferable iron, or having a surface coating of a ferrous magnetic or ferrous electric material, said plate having a planar outer surface and having an outer contour congruent with said specific contour of said planar area,
ii) fixation elements for fixating said plate to a wall and for exposing said planar outer surface at said wall, and
iii) a magnetic foil defining opposite first and second surfaces and having a peripheral contour congruent with said specific contour of said planar area and congruent with said outer contour of said planar outer surface, said first surface being coated with an adhesive for fixating said magnetic foil to said planar area, and said second surface being exposed for contacting said plate and removably suspending said apparatus on said wall.

2. The suspension system according to claim 1, said magnetic foil further comprising a release paper or cover foil protecting said adhesive coating prior to fixating said magnetic foil to said planar outer surface of said plate.

3. The suspension system to any of the claims 1 or 2, said fixation element comprising a number of screws, and said plate having a corresponding number of through-going holes for receiving said screws.

4. The suspension system according to claim 3, said fixation elements further comprising distance elements of a number identical to said number of screws for allowing said plate to be positioned a specific distance from said wall

5. The suspension system according to any of the preceding claims, said plate further comprising an adhesive coating applied to the surface of said plate opposite to said planar outer surface of said plate.

6. The suspension system according to claim 6, said plate further comprising a further cover foil or release paper initially protecting said coating of said plate and to be removed prior to fixating said plate to said wall.

7. The suspension system according to any of the preceding claims, said plate further comprising a wire connection for connecting said plate to a ground terminal for grounding said plate.

8. The suspension system according to any of the preceding claims, sand specific configuration being triangular, rectangular, circular, polygonal, elliptical or constituting a configuration composed of curved and/or linear segments.

9. A method of removably suspending an electronic apparatus on a wall, said apparatus having a bottom surface on which a planar area is defined having a specific contour, the method comprising: providing a suspension system including:
i) a plate of ferrous magnetic material, preferably iron, or a plate having a surface coating of a ferrous magnetic or ferrous electric material, said plate having a planar outer surface and having an outer contour congruent with said specific contour of said planar area,
ii) fixation elements for fixating said plate to said wall, and
iii) a magnetic foil defining opposite first and second surfaces and having a peripheral contour congruent with said specific contours of said planar area and congruent with said outer contour of said planar outer surface, said first surface being coated with an adhesive,
the method further comprising:
a) fixating said plate to said wall by means of said fixation elements and exposing said planar outer surface on said wall,
b) fixating said magnetic foil to said bottom surface by contacting said adhesive of said first surface with said planar area, and
c) removably suspending said electronic apparatus on said wall by contacting said magnetic foil with said plate while establishing registration between said magnetic foil and said plate.

10. The method according to claim 9, said magnetic foil of said plate further comprising a release paper or cover foil initially protecting said coating of said magnetic foil, and the method further comprising removal of said cover foil or release paper prior to contacting said adhesive of said first surface with said planar area.

11. The method according to any of the claims 9 or 10. said suspension system further comprising a number of screws and said plate having a corresponding number of through-going holes, the method further comprising mounting said screws in said through-going holes and fixating said screws in said wall for fixating said plate to said wall.

12. The method according to any of the claims 9-11, said apparatus having a set of feet for allowing said bottom surface to be raised above a supporting surface when said electronic apparatus is resting or standing on a supporting surface, said suspension system further comprising distance elements for allowing said plate to be positioned at a specific distance from said wall, said specific distance corresponding to the height of said feet of said apparatus, the method further comprising fixating said plate to wall at said specific distance from said wall by means of said distance elements,
